# EUROPEAN PATENT APPLICATION

(11) **EP 4 383 889 A1**
(43) Date of publication of application: **12.06.2024**
(21) Application number: 22852244.7
(22) Date of filing: 03.08.2022
(51) Int. Cl.: H04W 72/04, H04W 72/12, H04L 5/00

(54) **METHOD FOR DETERMINING BEAM APPLICATION TIME, AND TERMINAL AND NETWORK SIDE DEVICE**

(30) Priority: 06.08.2021 CN 202110903062
(71) Applicant: VIVO MOBILE COMMUNICATION CO., LTD., Dongguan, Guangdong 523863 (CN)
(72) Inventor: YANG, Yu, Dongguan, Guangdong 523863 (CN); SUN, Peng, Dongguan, Guangdong 523863 (CN)
(74) Representative: Murgitroyd & Company
(86) International application number: PCT/CN2022/109989
(87) International publication number: WO 2023/011532

(57) **Abstract**

This application discloses a method for determining a beam application time, a terminal, and a network-side device and pertains to the field of communication technologies. The method for determining a beam application time according to embodiments of this application includes: receiving first configuration information transmitted by a network-side device, where the first configuration information includes a plurality of configuration parameters, and each of the configuration parameters separately corresponds to at least one target resource object, the target resource object being determined based on at least one resource object list; and determining, based on the configuration parameters, a beam application time for application of a common beam indicated by the network-side device for each target resource object.

## Description

### CROSS-REFERENCE TO RELATED APPLICATION

This application claims priority to Chinese Patent Application No. 202110903062.3, filed on August 6, 2021 and entitled "METHOD FOR DETERMINING BEAM APPLICATION TIME, TERMINAL, AND NETWORK-SIDE DEVICE", which is incorporated herein by reference in its entirety.

### TECHNICAL FIELD

This application pertains to the field of communication technologies and specifically relates to a method for determining a beam application time, a terminal, and a network-side device.

### BACKGROUND

In a multi-carrier scenario, a network may indicate a common transmission configuration indicator state (Transmission Configuration Indicator state, TCI state) using a medium access control (Medium Access Control, MAC) control element (Control Element, CE) or downlink control information (Downlink Control Information, DCI), and the TCI state indicates one common beam (common beam) that can be used for transmission of multiple channels on multiple carriers.

However, subcarrier spacings (SCS: Subcarrier Spacing) of different component carriers (Component Carrier, CC) and different bandwidth parts (Bandwidth Part, BWP) on different CCs are different, which results in different beam application times (Beam Application Time, BAT) of the common beam for each CC or each BWP of each CC. Therefore, how a BAT of each CC or each BWP of each CC in a group of CCs is determined is an important topic to be urgently solved in the industry at present.

### SUMMARY

Embodiments of this application provide a method for determining a beam application time, a terminal, and a network-side device, so as to solve the problem of how beam application times for application of a common beam for different CCs/BWPs are determined in a multi-carrier scenario.

According to a first aspect, a method for determining a beam application time is provided and applied to a terminal. The method includes:
receiving first configuration information transmitted by a network-side device, where the first configuration information includes a plurality of configuration parameters, and each of the configuration parameters separately corresponds to at least one target resource object, the target resource object being determined based on at least one resource object list; and
determining, based on the configuration parameters, a beam application time for application of a common beam indicated by the network-side device for each target resource obj ect.

According to a second aspect, a method for determining a beam application time is provided and applied to a network-side device. The method includes:
obtaining first configuration information, where the first configuration information includes a plurality of configuration parameters, and each of the configuration parameters separately corresponds to at least one target resource object, the target resource object being determined based on at least one resource object list; and
transmitting the first configuration information to a terminal.

According to a third aspect, an apparatus for determining a beam application time is provided, including:
a receiving module configured to receive first configuration information transmitted by a network-side device, where the first configuration information includes a plurality of configuration parameters, and each of the configuration parameters separately corresponds to at least one target resource object, the target resource object being determined based on at least one resource object list; and
a determining module configured to determine, based on the configuration parameters, a beam application time for application of a common beam indicated by the network-side device for each target resource object.

According to a fourth aspect, an apparatus for determining a beam application time is provided, including:
an obtaining module configured to obtain first configuration information, where the first configuration information includes a plurality of configuration parameters, and each of the configuration parameters separately corresponds to at least one target resource object, the target resource object being determined based on at least one resource object list; and
a transmitting module configured to transmit the first configuration information to a terminal.

According to a fifth aspect, a terminal is provided, including a processor, a memory, and a program or instructions stored in the memory and capable of running on the processor, and when the program or instructions are executed by the processor, the steps of the method according to the first aspect are implemented.

According to a sixth aspect, a terminal is provided, including a processor and a communication interface. The communication interface is configured to receive first configuration information transmitted by a network-side device, where the first configuration information includes a plurality of configuration parameters, and each of the configuration parameters separately corresponds to at least one target resource object, the target resource object being determined based on at least one resource object list. The processor is configured to determine, based on the configuration parameters, a beam application time for application of a common beam indicated by the network-side device for each target resource object.

According to a seventh aspect, a network-side device is provided, where the network-side device includes a processor, a memory, and a program or instructions stored in the memory and capable of running on the processor, and when the program or instructions are executed by the processor, the steps of the method according to the second aspect are implemented.

According to an eighth aspect, a network-side device is provided, including a processor and a communication interface. The processor is configured to obtain first configuration information, where the first configuration information includes a plurality of configuration parameters, and each of the configuration parameters separately corresponds to at least one target resource object, the target resource object being determined based on at least one resource object list. The communication interface is configured to transmit the first configuration information to a terminal.

According to a ninth aspect, a readable storage medium is provided, where the readable storage medium stores a program or instructions, and when the program or instructions are executed by a processor, the steps of the method according to the first aspect are implemented, or the steps of the method according to the second aspect are implemented.

According to a tenth aspect, a chip is provided, where the chip includes a processor and a communication interface, the communication interface is coupled to the processor, and the processor is configured to run a program or instructions to implement the method according to the first aspect or to implement the method according to the second aspect.

According to an eleventh aspect, a computer program/program product is provided, where the computer program/program product is stored in a non-transitory storage medium, and when the program/program product is executed by at least one processor, the steps of the method according to the first aspect are implemented, or the steps of the method according to the second aspect are implemented.

In the embodiments of this application, in a case that the network-side device indicates a common beam and the common beam is applied to at least one group of CCs in a carrier aggregation scenario, the terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

### BRIEF DESCRIPTION OF DRAWINGS

FIG. 1 is a structural diagram of a wireless communication system to which the embodiments of this application are applicable;
FIG. 2 is a first schematic flowchart of a method for determining a beam application time according to an embodiment of this application;
FIG. 3 is a second schematic flowchart of a method for determining a beam application time according to an embodiment of this application;
FIG. 4 is a schematic flowchart of signaling exchange of a method for determining a beam application time according to an embodiment of this application;
FIG. 5 is a first schematic structural diagram of an apparatus for determining a beam application time according to an embodiment of this application;
FIG. 6 is a second schematic structural diagram of an apparatus for determining a beam application time according to an embodiment of this application;
FIG. 7 is a schematic structural diagram of a communication device according to an embodiment of this application;
FIG. 8 is a schematic diagram of a hardware structure of a terminal according to an embodiment of this application; and
FIG. 9 is a schematic structural diagram of a network-side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application shall fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, "and/or" in the specification and claims represents at least one of connected objects, and the character "/" generally indicates that the contextually associated objects have an "or" relationship.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

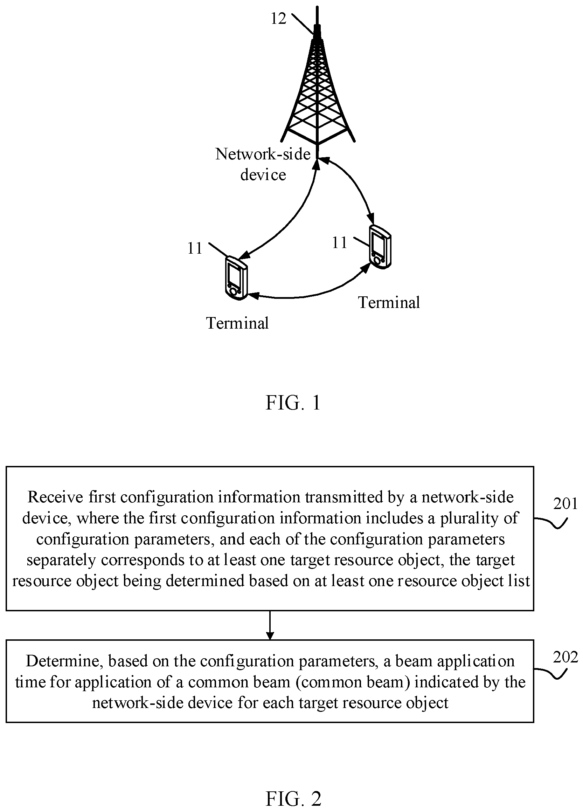

FIG. 1 is a structural diagram of a wireless communication system to which the embodiments of this application are applicable. The wireless communication system includes a terminal 11 and a network-side device 12. The terminal 11 may also be referred to as a terminal device or user equipment (User Equipment, UE). The terminal 11 may be a terminal-side device, such as a mobile phone, a tablet personal computer (Tablet Personal Computer), a laptop computer (Laptop Computer) or notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicular user equipment (VUE), pedestrian user equipment (PUE), or smart-home appliance (a smart-home device with a wireless communication function, for example, a refrigerator, a television, a washing machine, or a piece of furniture). The wearable device includes a smart watch, a smart band, smart earphones, smart glasses, smart jewelry (a smart bracelet, a smart chain bracelet, a smart ring, a smart necklace, a smart anklet, a smart chain anklet, or the like), a smart wrist band, smart clothing, a game console, or the like. It should be noted that a specific type of the terminal 11 is not limited in the embodiments of this application. The network-side device 12 may be a base station or a core network. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a Node B, an evolved node B (eNB), a home NodeB, a home evolved NodeB, a WLAN access point, a Wi-Fi node, a transmission reception point (Transmitting Receiving Point, TRP), or other appropriate terms in the art. Provided that the same technical effects are achieved, the base station is not limited to any specific technical term. It should be noted that in the embodiments of this application, only the base station in the NR system is used as an example, although the specific type of the base station is not limited.

The following describes in detail the method for determining a beam application time provided in the embodiments of this application by using some embodiments and application scenarios thereof with reference to the accompanying drawings.

The embodiments of this application provide a method for determining a beam application time. The method may be applicable to a carrier aggregation scenario in which in a case that a network-side device indicates a common beam and the common beam is applied to at least one group of CCs, a terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

FIG. 2 is a first schematic flowchart of a method for determining a beam application time according to an embodiment of this application. As shown in FIG. 2, the method includes the following steps.

Step 201. Receive first configuration information transmitted by a network-side device, where the first configuration information includes a plurality of configuration parameters, and each of the configuration parameters separately corresponds to at least one target resource object, the target resource object being determined based on at least one resource object list.

It should be noted that, the method for determining a beam application time shown in FIG. 2 may be executed by a terminal, an apparatus for determining a beam application time, or a control module for executing the method for determining a beam application time in the apparatus for determining a beam application time.

Optionally, to make the network-side device and a terminal have consistent understanding of beam effective times for application of the common beam for the CCs/BWPs, the network-side device first obtains first configuration information, where the first configuration information includes a plurality of configuration parameters, and each of the configuration parameters separately corresponds to at least one target resource object, the target resource object being determined based on at least one resource object list; and then the network-side device transmits the first configuration information to the terminal. The terminal receives the first configuration information transmitted by the network-side device, and the terminal obtains, by parsing the first configuration information, the plurality of configuration parameters included in the first configuration information. Each configuration parameter separately corresponds to at least one target resource object, the target resource object being determined based on at least one resource object list.

Optionally, the target resource object is a CC or a BWP on a CC, and the resource object list is, for example, a CC list (list), a CC group, or a CC set. In a case that the target resource object is a CC, each of the configuration parameters separately corresponds to a plurality of CCs. In a case that the target resource object is a BWP on a CC, each of the configuration parameters separately corresponds to a plurality of BWPs on CCs. Optionally, the network-side device configures at least one CC list, each CC list includes at least one CC, each CC includes at least one BWP, and each BWP has its respective SCS.

Step 202. Determine, based on the configuration parameters, a beam application time for application of a common beam indicated by the network-side device for each target resource obj ect.

Optionally, in a multi-carrier scenario, the network-side device may transmit a first message to the terminal, where the first message indicates a common beam, and the common beam is used for determining common quasi-co-location (QCL) information and/or common uplink transmission (UL Tx) spatial filter (spatial filter) information for at least one group of CCs or BWPs on CCs. The terminal determines, based on the configuration parameters obtained in step 201, a beam application time for application of the common beam for each target resource obj ect.

Optionally, the first message may be a piece of TCI state information, for example, a TCI state ID in a MAC CE or DCI command, which may be used for determining beam information for multiple channels. Optionally, the beam information may include at least one of the following: beam identification information, spatial relation (spatial relation) information, spatial domain transmission filter (spatial domain transmission filter) information, spatial domain reception filter (spatial domain reception filter) information, spatial filter information, TCI state information, QCL information, a QCL parameter, and the like. Downlink beam information may be usually represented by TCI state information or QCL information. Uplink beam information may be usually represented by TCI state information or spatial relation information.

Optionally, magnitude (unit) of the configuration parameters may be any one of the following: number of symbols, number of slots, second, and millisecond.

It should be noted that an order between an execution time of the network-side device transmitting the first configuration information to the terminal and an execution time of the network-side device transmitting the first message to the terminal is not limited in this embodiment of this application.

For the method for determining a beam application time provided in this embodiment of this application, in a case that the network-side device indicates a common beam and the common beam is applied to at least one group of CCs in a carrier aggregation scenario, the terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

Optionally, the configuration parameters configured by the network-side device are carried in any one of the following manners or a combination thereof:
manner 1. being carried in configuration information of the resource object list;
manner 2. being carried in configuration information of at least one CC;
manner 3. being carried in configuration information of at least one BWP on at least one CC;
manner 4. being carried in configuration information of a target cell in which an uplink control channel is located; and
manner 5. being carried in configuration information of a target BWP of the target cell in which the uplink control channel is located.

The above manners are separately described as follows.

Manner 1 is described as follows: the network-side device has the configuration parameters carried in the configuration information of the resource object list delivered to the terminal, and after parsing the configuration information to obtain the configuration parameters, the terminal determines, based on the configuration parameters, a beam application time for application of the common beam indicated by the network-side device for each target resource obj ect.

Optionally, based on manner 1, implementation of the "determining, based on the configuration parameters, a beam application time for application of a common beam indicated by the network-side device for each target resource object" in step 202 may include any one of the following manners.

Manner 1a. In a case that the target resource object is a CC and the configuration parameters are carried in the configuration information of the resource object list, the configuration parameters may be configuration parameters of all CCs and corresponding to the target cell in which the uplink control channel is located, or of all CCs and corresponding to the BWP of the target cell in which the uplink control channel is located. Optionally, the uplink control channel, for example, a physical uplink control channel (Physical Uplink Control Channel, PUCCH), is used to carry an acknowledgement (ACK), where the ACK is an ACK for a command (for example, MAC CE or DCI) used by the network-side device to transmit the first message. Optionally, the target cell in which the uplink control channel is located may be a primary cell configured with PUCCH resources or a secondary cell configured with PUCCH resources. Optionally, the BWP of the target cell in which the uplink control channel is located may be a BWP of a primary cell or secondary cell configured with PUCCH resources. Based on this, the implementation of the "determining, based on the configuration parameters, a beam application time for application of a common beam indicated by the network-side device for each target resource object" in step 202 may include: determining beam application times for application of the common beam for all CCs in the resource object list, based on configuration parameters, included in the configuration information of the resource object list, of all CCs and corresponding to the target cell in which the uplink control channel is located, or of all CCs and corresponding to the BWP of the target cell in which the uplink control channel is located.

Alternatively, in a case that the target resource object is a BWP on a CC and the configuration parameters are carried in the configuration information of the resource object list, the configuration parameters may be configuration parameters of all BWPs on all CCs and corresponding to the target cell in which the uplink control channel is located, or of all BWPs on all CCs and corresponding to the BWP of the target cell in which the uplink control channel is located. Based on this, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on configuration parameters, included in the configuration information of the resource object list, of all BWPs on all CCs and corresponding to the target cell in which the uplink control channel is located, or of all BWPs on all CCs and corresponding to the BWP of the target cell in which the uplink control channel is located.

Manner 1b. In a case that the target resource object is a CC and the configuration parameters are carried in the configuration information of the resource object list, the configuration parameters may be a configuration parameter of a second reference CC and corresponding to the target cell in which the uplink control channel is located, or of a second reference CC and corresponding to the BWP of the target cell in which the uplink control channel is located. Based on this, the implementation of the "determining, based on the configuration parameters, a beam application time for application of a common beam indicated by the network-side device for each target resource object" in step 202 may include: determining beam application times for application of the common beam for all CCs in the resource object list, based on a configuration parameter, included in the configuration information of the resource object list, of a second reference CC and corresponding to the target cell in which the uplink control channel is located, or of a second reference CC and corresponding to the BWP of the target cell in which the uplink control channel is located. Optionally, the second reference CC may be a CC in a CC list.

For example, it is assumed that a group of CCs include CC1, CC2, CC3, and CC4, each CC including one or more BWPs; and the cell in which the uplink control channel is located is cell1 and cell2, cell 1 including BWP5 to BWP8 and cell2 including BWP9 to BWP11; and it is assumed that the second reference CC is CC2, and the target cell is cell1; the configuration parameter of CC2 and corresponding to cell1 in which the uplink control channel is located is T21; the configuration parameter of CC2 and corresponding to BWP5 of cell1 in which the uplink control channel is located is T215; and the configuration parameter of CC2 and corresponding to BWP6 of cell 1 in which the uplink control channel is located is T216. The network-side device, when configuring, configures only the configuration parameter T21 of CC2 and corresponding to cell1 in which the uplink control channel is located, the configuration parameter T215 of CC2 and corresponding to BWP5 of cell 1 in which the uplink control channel is located, or the like, and has the configuration parameters carried in the configuration information of the resource object list. The terminal then determines beam application times for application of the common beam for all CCs (that is, CC1, CC2, CC3, and CC4), based on only the configuration parameter T21 of CC2 and corresponding to cell1 in which the uplink control channel is located, the configuration parameter T215 of CC2 and corresponding to BWP5 of cell1 in which the uplink control channel is located, or the like. Optionally, the second reference CC may be selected in a manner such as specification by the network-side device, specification by a protocol, being a CC corresponding to the largest value of all configuration parameters, or the CCs taking turns.

Alternatively, in a case that the target resource object is a BWP on a CC and the configuration parameters are carried in the configuration information of the resource object list, the configuration parameters may be a configuration parameter of a second reference BWP on a second reference CC and corresponding to the target cell in which the uplink control channel is located, or of a second reference BWP on a second reference CC and corresponding to the BWP of the target cell in which the uplink control channel is located. Based on this, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on a configuration parameter, included in the configuration information of the resource object list, of a second reference BWP on a second reference CC and corresponding to the target cell in which the uplink control channel is located, or of a second reference BWP on a second reference CC and corresponding to the BWP of the target cell in which the uplink control channel is located. The second reference BWP on a second reference CC may be selected in a manner such as specification by the network-side device, specification by a protocol, being a CCBWP corresponding to the largest value of all configuration parameters, or the CCs/BWPs taking turns.

Manner 1c. In a case that the target resource object is a CC and the configuration parameters are carried in the configuration information of the resource object list, the configuration parameters may be configuration parameters of all CCs. Based on this, the implementation of the "determining, based on the configuration parameters, a beam application time for application of a common beam indicated by the network-side device for each target resource object" in step 202 may include: determining beam application times for application of the common beam for all CCs in the resource object list, based on configuration parameters of all CCs included in the configuration information of the resource object list.

Alternatively, in a case that the target resource object is a BWP on a CC and the configuration parameters are carried in the configuration information of the resource object list, the configuration parameters may be configuration parameters of all BWPs on all CCs. Based on this, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on configuration parameters of all BWPs on all CCs included in the configuration information of the resource object list.

Manner 1d. In a case that the target resource object is a CC and the configuration parameters are carried in the configuration information of the resource object list, the configuration parameters may be a configuration parameter of a third reference CC. Based on this, the implementation of the "determining, based on the configuration parameters, a beam application time for application of a common beam indicated by the network-side device for each target resource object" in step 202 may include: determining beam application times for application of the common beam for all CCs in the resource object list, based on a configuration parameter of a third reference CC included in the configuration information of the resource object list. For example, it is assumed that a group of CCs include CC1, CC2, CC3, and CC4, each CC including one or more BWPs. The network-side device, when configuring, configures a configuration parameter for only CC3 (assuming that CC3 is a preset third reference CC), and has the configuration parameter carried in the configuration information of the resource object list. The terminal then determines beam application times for application of the common beam for all CCs (that is, CC1, CC2, CC3, and CC4), based on only the configuration parameter corresponding to CC3 and carried in the configuration information of the resource object list. Optionally, the third reference CC may be selected in a manner such as specification by the network-side device, specification by a protocol, being a CC corresponding to the largest value of all configuration parameters, or the CCs taking turns.

Alternatively, in a case that the target resource object is a BWP on a CC and the configuration parameters are carried in the configuration information of the resource object list, the configuration parameters may be a configuration parameter of a third reference BWP on a third reference CC. Based on this, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on a configuration parameter of a third reference BWP on a third reference CC included in the configuration information of the resource object list. For example, it is assumed that a group of CCs include CC1, CC2, CC3, and CC4, each CC including one or more BWPs. The network-side device, when configuring, configures a configuration parameter for only BWP3 on CC3 (assuming that CC3 is a preset third reference CC, and BWP3 is a preset third reference BWP), and has the configuration parameter carried in the configuration information of the resource object list. The terminal then determines beam application times for application of the common beam for all BWPs on all CCs, based on only the configuration parameter corresponding to BWP3 on CC3. Optionally, the third reference BWP on a third reference CC may be selected in a manner such as specification by the network-side device, specification by a protocol, being a CCBWP corresponding to the largest value of all configuration parameters, or the CCs/BWPs taking turns.

Manner 2. being carried in configuration information of at least one CC.

Optionally, manner 2 is described as follows: the network-side device has the configuration parameters carried in the configuration information of the CCs delivered to the terminal, and after parsing the configuration information to obtain the configuration parameters, the terminal determines, based on the configuration parameters, a beam application time for application of the common beam indicated by the network-side device for each target resource obj ect.

Based on manner 2, the implementation of the "determining, based on the configuration parameters, a beam application time for application of a common beam indicated by the network-side device for each target resource object" in step 202 may include any one of the following manners.

Manner 2a. In a case that the target resource object is a CC and the configuration parameters are carried in the configuration information of at least one CC, the implementation of the "determining, based on the configuration parameters, a beam application time for application of a common beam indicated by the network-side device for each target resource object" in step 202 may include: determining, based on the configuration parameters carried in the configuration information of the CCs, a beam application time for application of the common beam for the CC. To be specific, configuration information of each CC carries a configuration parameter of that CC.

Manner 2b. In a case that the target resource object is a CC and the configuration parameters are carried in the configuration information of at least one CC, the implementation of the "determining, based on the configuration parameters, a beam application time for application of a common beam indicated by the network-side device for each target resource object" in step 202 may include: determining a beam application time for application of the common beam for the CC, based on the configuration parameters, carried in the configuration information of the CCs, of the CCs and corresponding to the target cell in which the uplink control channel is located. To be specific, configuration information of each CC carries a configuration parameter of that CC, where the configuration parameter corresponds to the target cell in which the uplink control channel is located.

Manner 2c. In a case that the target resource object is a BWP on a CC and the configuration parameters are carried in the configuration information of at least one CC, the implementation of the "determining, based on the configuration parameters, a beam application time for application of a common beam indicated by the network-side device for each target resource object" in step 202 may include: determining, based on a plurality of configuration parameters carried in the configuration information of the CCs, beam application times for application of the common beam for BWPs on the CC, respectively. To be specific, in the plurality of configuration parameters carried in the configuration information of each CC, each configuration parameter is used for one BWP on that CC.

Manner 2d. In a case that the target resource object is a BWP on a CC and the configuration parameters are carried in the configuration information of at least one CC, the implementation of the "determining, based on the configuration parameters, a beam application time for application of a common beam indicated by the network-side device for each target resource object" in step 202 may include: determining beam application times for application of the common beam for BWPs on the CC, respectively, based on a plurality of configuration parameters, carried in the configuration information of the CCs, of BWPs on the CCs and corresponding to the BWP of the target cell in which the uplink control channel is located. To be specific, configuration information of each CC carries a plurality of configuration parameters of that CC, where at least one configuration parameter of the plurality of configuration parameters is used for one BWP on that CC, and at least one configuration parameter of that BWP corresponds to the BWP of the target cell in which the uplink control channel is located.

Manner 3. being carried in configuration information of at least one BWP on at least one CC.

Optionally, manner 3 is described as follows: the network-side device has the configuration parameters carried in configuration information of each BWP on the CCs delivered to the terminal, and after parsing the configuration information to obtain the configuration parameters, the terminal determines, based on the configuration parameters, a beam application time for application of the common beam indicated by the network-side device for each target resource object.

Based on manner 3, the implementation of the "determining, based on the configuration parameters, a beam application time for application of a common beam indicated by the network-side device for each target resource object" in step 202 may include any one of the following manners.

Manner 3a. In a case that the target resource object is a BWP on a CC and the configuration parameters are carried in the configuration information of at least one BWP on at least one CC, the implementation of the "determining, based on the configuration parameters, a beam application time for application of a common beam indicated by the network-side device for each target resource object" in step 202 may include: determining, based on a configuration parameter carried in configuration information of each BWP on the CCs, beam application times for application of the common beam for BWPs on the CC, respectively. To be specific, configuration information of each BWP on each CC carries a configuration parameter of that BWP.

Manner 3b. In a case that the target resource object is a BWP on a CC and the configuration parameters are carried in the configuration information of at least one BWP on at least one CC, the implementation of the "determining, based on the configuration parameters, a beam application time for application of a common beam indicated by the network-side device for each target resource object" in step 202 may include: determining beam application times for application of the common beam for BWPs on the CC, respectively, based on configuration parameters, carried in the configuration information of each BWP on the CCs, of the BWPs and corresponding to the BWP of the target cell in which the uplink control channel is located. To be specific, configuration information of each BWP on each CC carries a configuration parameter of that BWP, where the configuration parameter corresponds to the BWP of the target cell in which the uplink control channel is located.

Optionally, in a case of a plurality of configuration parameters being carried in the configuration information of the CC, the configuration parameters are respectively set with target cells in which uplink control channels are located, or with indexes corresponding to BWPs of the target cells in which the uplink control channels are located, so as to establish a correspondence between the configuration parameters and the target cells or BWPs of the target cells; or the configuration parameters respectively correspond, in a preset arrangement order, to target cells in which uplink control channels are located, or BWPs of the target cells in which the uplink control channels are located. For example, an order of the target cells or the BWPs of the target cells is preset to be in ascending order of cell indexes or BWP IDs, and the configuration parameters corresponding to the target cells or the BWPs of the target cells are set in this order, so as to reduce signaling overheads.

Manner 4. being carried in configuration information of a target cell in which an uplink control channel is located.

Optionally, manner 4 is described as follows: the network-side device has the configuration parameters carried in the configuration information of the target cell in which the uplink control channel is located delivered to the terminal, and after parsing the configuration information to obtain the configuration parameters, the terminal determines, based on the configuration parameters, a beam application time for application of the common beam indicated by the network-side device for each target resource object. After the network-side device transmits a first message for indicating the common beam to the terminal, the terminal transmits an acknowledgement (ACK) message in response to the first message to the network-side device, and the uplink control channel is used to carry the ACK message.

Optionally, the implementation of the "determining, based on the configuration parameters, a beam application time for application of a common beam indicated by the network-side device for each target resource object" in step 202 may include any one of the following manners.

Manner 4a. The configuration information of the target cell in which the uplink control channel is located carries only a configuration parameter corresponding to a first reference CC. In this case, in a case that the target resource object is a CC and the configuration parameters are carried in the configuration information of the target cell in which the uplink control channel is located, the implementation of the "determining, based on the configuration parameters, a beam application time for application of a common beam indicated by the network-side device for each target resource object" in step 202 may include: determining beam application times for application of the common beam for all CCs in the resource object list, based on the configuration parameter corresponding to the first reference CC and included in the configuration information of the target cell in which the uplink control channel is located. The first reference CC is a CC in a CC list. For example, it is assumed that a group of CCs include CC1, CC2, CC3, and CC4, each CC including one or more BWPs. The network-side device, when configuring, configures a configuration parameter for only CC1 (assuming that CC1 is a first reference CC), and has the configuration parameter carried in the configuration information of the target cell in which the uplink control channel is located. The terminal then determines beam application times for application of the common beam for all CCs (that is, CC1, CC2, CC3, and CC4), based on only the configuration parameter carried in the configuration information of CC1. Optionally, the first reference CC may be selected in a manner such as specification by the network-side device, specification by a protocol, being a CC corresponding to the largest value of all configuration parameters, or the CCs taking turns.

Manner 4b. The configuration information of the target cell in which the uplink control channel is located carries configuration parameters corresponding to all CCs. In this case, in a case that the target resource object is a CC and the configuration parameters are carried in the configuration information of the target cell in which the uplink control channel is located, the implementation of the "determining, based on the configuration parameters, a beam application time for application of a common beam indicated by the network-side device for each target resource object" in step 202 may include: determining beam application times for application of the common beam for all CCs in the resource object list, based on the configuration parameters corresponding to all CCs and included in the configuration information of the target cell in which the uplink control channel is located.

Manner 4c. The configuration information of the target cell in which the uplink control channel is located carries only a configuration parameter of a first reference CC and corresponding to the target cell in which the uplink control channel is located. In this case, in a case that the target resource object is a CC and the configuration parameters are carried in the configuration information of the target cell in which the uplink control channel is located, the implementation of the "determining, based on the configuration parameters, a beam application time for application of a common beam indicated by the network-side device for each target resource object" in step 202 may include: determining beam application times for application of the common beam for all CCs in the resource object list, based on the configuration parameter, included in the configuration information of the target cell in which the uplink control channel is located, of the first reference CC and corresponding to the target cell in which the uplink control channel is located.

Manner 4d. The configuration information of the target cell in which the uplink control channel is located carries configuration parameters of all CCs and corresponding to the target cell in which the uplink control channel is located. In this case, in a case that the target resource object is a CC and the configuration parameters are carried in the configuration information of the target cell in which the uplink control channel is located, the implementation of the "determining, based on the configuration parameters, a beam application time for application of a common beam indicated by the network-side device for each target resource object" in step 202 may include: determining beam application times for application of the common beam for all CCs in the resource object list, based on the configuration parameters, included in the configuration information of the target cell in which the uplink control channel is located, of all CCs and corresponding to the target cell in which the uplink control channel is located.

Manner 5. being carried in configuration information of a target BWP of the target cell in which the uplink control channel is located.

Optionally, manner 5 is described as follows: the network-side device has the configuration parameters carried in the configuration information of the target BWP of the target cell in which the uplink control channel is located delivered to the terminal, and after parsing the configuration information to obtain the configuration parameters, the terminal determines, based on the configuration parameters, a beam application time for application of the common beam indicated by the network-side device for each target resource object.

Based on manner 5, the implementation of the "determining, based on the configuration parameters, a beam application time for application of a common beam indicated by the network-side device for each target resource object" in step 202 may include any one of the following manners.

Manner 5a. The configuration information of the BWP of the target cell in which the uplink control channel is located carries only a configuration parameter corresponding to a first reference BWP on a first reference CC. In this case, in a case that the target resource object is a BWP on a CC and the configuration parameters are carried in the configuration information of the BWP of the target cell in which the uplink control channel is located, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on the configuration parameter corresponding to the first reference BWP on a first reference CC and included in the configuration information of the BWP of the target cell in which the uplink control channel is located. For example, it is assumed that a group of CCs include CC1, CC2, CC3, and CC4, each CC including one or more BWPs. The network-side device, when configuring, configures a configuration parameter for only BWP1 on CC1 (assuming that CC1 is a first reference CC and BWP1 is a first reference BWP on CC1), and has the configuration parameter carried in the configuration information of the BWP of the target cell in which the uplink control channel is located. The terminal then determines, based on only the configuration parameter corresponding to BWP1 on CC1, beam application times for application of the common beam for the BWPs on all CCs (that is, CC1, CC2, CC3, and CC4). Optionally, the first reference BWP on a first reference CC may be selected in a manner such as specification by the network-side device, specification by a protocol, being a CCBWP corresponding to the largest value of all configuration parameters, or the CCs/BWPs taking turns.

Manner 5b. The configuration information of the BWP of the target cell in which the uplink control channel is located carries configuration parameters corresponding to all BWPs on all CCs. In this case, in a case that the target resource object is a BWP on a CC and the configuration parameters are carried in the configuration information of the BWP of the target cell in which the uplink control channel is located, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on the configuration parameters corresponding to all BWPs on all CCs and included in the configuration information of the BWP of the target cell in which the uplink control channel is located.

Manner 5c. The configuration information of the BWP of the target cell in which the uplink control channel is located carries only a configuration parameter of a first reference BWP on a first reference CC and corresponding to the BWP of the target cell in which the uplink control channel is located. In this case, in a case that the target resource object is a BWP on a CC and the configuration parameters are carried in the configuration information of the BWP of the target cell in which the uplink control channel is located, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on the configuration parameter, included in the configuration information of the BWP of the target cell in which the uplink control channel is located, of the first reference BWP on a first reference CC and corresponding to the BWP of the target cell in which the uplink control channel is located.

Manner 5d. The configuration information of the BWP of the target cell in which the uplink control channel is located carries configuration parameters of all BWPs on all CCs and corresponding to the BWP of the target cell in which the uplink control channel is located. In this case, in a case that the target resource object is a BWP on a CC and the configuration parameters are carried in the configuration information of the BWP of the target cell in which the uplink control channel is located, the implementation of the "determining, based on the configuration parameters, a beam application time for application of a common beam indicated by the network-side device for each target resource object" in step 202 may include: determining beam application times for application of the common beam for all BWPs on all CCs in the resource object list, based on the configuration parameters, included in the configuration information of the BWP of the target cell in which the uplink control channel is located, of all BWPs on all CCs and corresponding to the BWP of the target cell in which the uplink control channel is located.

Optionally, the network-side device, when configuring, configures a configuration parameter for each CC or each BWP on each CC in a group of CCs and has the configuration parameter correspondingly carried in configuration information of each CC or each BWP on each CC. However, the terminal determines beam application times for application of the common beam for all CCs or all BWPs on all CCs, based on only a configuration parameter carried in configuration information of a first target CC or first target BWP on a first target CC among the CCs. Based on this, the implementation of the "determining, based on the configuration parameters, a beam application time for application of a common beam indicated by the network-side device for each target resource object" in step 202 may include: obtaining a configuration parameter carried in configuration information of a first target CC among the CCs, and determining, based on the configuration parameter, a beam application time for application of the common beam for each CC; or obtaining a configuration parameter carried in configuration information of a first target BWP on a first target CC among the CCs, and determining, based on the configuration parameter, beam application times for application of the common beam for all BWPs on the CCs. For example, it is assumed that a group of CCs include CC1, CC2, CC3, and CC4, each CC including one or more BWPs. The network-side device, when configuring, configures a configuration parameter for each of CC1, CC2, CC3, and CC4, or for each BWP on each CC, and has the configuration parameters carried in the configuration information of the CCs or of the BWPs on the CCs. However, the terminal determines beam application times for application of the common beam for all CCs (that is, CC1, CC2, CC3, and CC4) or all BWPs on all CCs, based on only the configuration parameter carried in the configuration information of CC1 (assuming that CC1 is a preset first target CC) or BWP1 on CC1 (assuming that BWP1 is a first target BWP). Optionally, the preset first target CC or the first target BWP on a first target CC may be selected in a manner such as specification by the network-side device, specification by a protocol, being a CCBWP corresponding to the largest value of all configuration parameters, or the CCs/BWPs taking turns.

Optionally, the network-side device, when configuring, may not configure a configuration parameter for each CC or each BWP on each CC in a group of CCs but configure a configuration parameter for only one fourth reference CC or one fourth reference BWP on one fourth reference CC among the CCs. The terminal then determines beam application times for application of the common beam for all CCs or all BWPs on all CCs, based on only the configuration parameter carried in the configuration information of the fourth reference CC or fourth reference BWP on the fourth reference CC. Based on this, the implementation of the "determining, based on the configuration parameters, a beam application time for application of a common beam indicated by the network-side device for each target resource object" in step 202 may include: determining, based on the configuration parameter corresponding to the fourth reference CC, beam application times for application of the common beam for all CCs; or determining, based on the configuration parameter corresponding to the fourth reference BWP on the fourth reference CC, beam application times for application of the common beam for all BWPs on all CCs. For example, it is assumed that a group of CCs include CC1, CC2, CC3, and CC4, each CC including one or more BWPs. The network-side device, when configuring, configures a configuration parameter for only CC4 (assuming that CC4 is a preset fourth reference CC) or BWP4 on CC4 (assuming that BWP4 is a fourth reference BWP), and has the configuration parameter carried in configuration information of CC4 or BWP4 on CC4. The terminal then determines beam application times for application of the common beam for all CCs (that is, CC1, CC2, CC3, and CC4) or all BWPs on all CCs, based on only the configuration parameter carried in the configuration information of CC4 or BWP4 on CC4. Optionally, the fourth reference CC or the fourth reference BWP on the fourth reference CC may be selected in a manner such as specification by the network-side device, specification by a protocol, being a CC/BWP corresponding to the largest value of all configuration parameters, or the CCs/BWPs taking turns.

Optionally, in a case that the CCs belong to one band, the implementation of the "determining, based on the configuration parameters, a beam application time for application of a common beam indicated by the network-side device for each target resource object" in step 202 may include: selecting at least one target configuration parameter from all configuration parameters as a configuration parameter corresponding to the CCs or BWPs on the CCs, for example, the target configuration parameter may be the largest value among all configuration parameters; and determining, based on the configuration parameter corresponding to the CCs or the BWPs on the CCs, beam application times for application of the common beam for the CCs or the BWPs on the CCs. For example, the largest value of configuration parameters corresponding to CC1, CC2, CC3 and CC4 (or the BWPs on the CCs) is used as the configuration parameter corresponding to the CCs (or the BWPs on the CCs).

Optionally, the implementation of the "determining, based on the configuration parameters, a beam application time for application of a common beam indicated by the network-side device for each target resource object" in step 202 may include: performing rounding calculation, in a unit of slot, on the configuration parameters to obtain a beam application time for application of the common beam for each target resource object.

Implementation of this step is described as follows.

Optionally, it is possible that in a case that the configuration parameters are in a unit of number of symbols, a 1st slot after Y symbols following a first time is determined as a beam application time for application of the common beam for each target resource object, where the configuration parameters are Y, and the first time is a time to transmit an ACK message in response to a first message, the first message being a message that the network-side device transmits for indicating the common beam. Or it is further possible that in a case that the configuration parameters are in a unit of number of symbols, a slot at which the Y-th symbol following the first time is located is determined as a beam application time for application of the common beam for each target resource object. Or it is still further possible that in a case that the configuration parameters are in a unit of number of symbols, a remainder of Y divided by a target value is first calculated, rounding-up or rounding down calculation is then performed on the remainder to obtain a result M, and a slot at which the M-th symbol following the first time is located is determined as a beam application time for application of the common beam for each target resource object.

Optionally, in a case that the configuration parameters are in a unit of number of slots, a 1st slot after the Y-th slot following the first time or the Y-th slot following the first time is determined as a beam application time for application of the common beam for each target resource object.

Optionally, in a case that the configuration parameters are in a unit of second or millisecond, a 1st slot after the Y-th unit following the first time or a slot at which the Y-th unit following the first time is located is determined as a beam application time for application of the common beam for each target resource object.

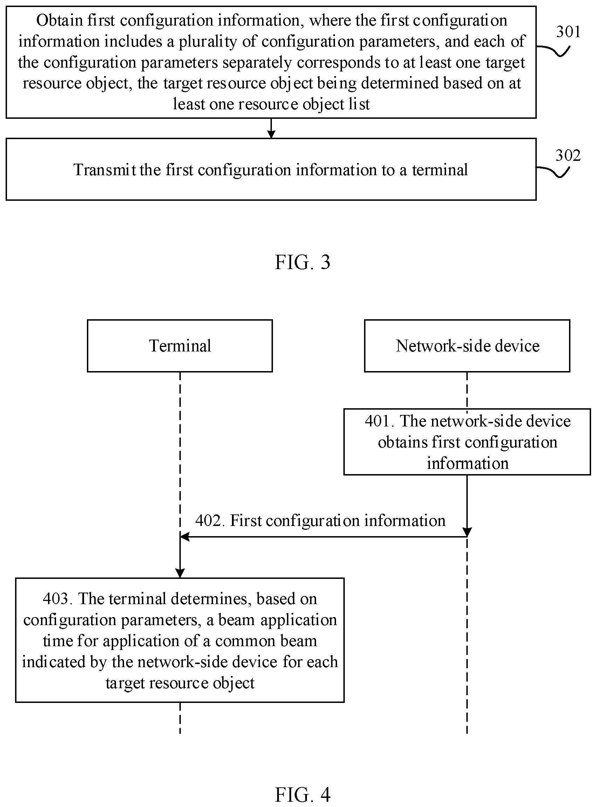

FIG. 3 is a second schematic flowchart of a method for determining a beam application time according to an embodiment of this application. As shown in FIG. 3, the method includes the following steps.

Step 301. Obtain first configuration information, where the first configuration information includes a plurality of configuration parameters, and each of the configuration parameters separately corresponds to at least one target resource object, the target resource object being determined based on at least one resource object list.

It should be noted that the method for determining a beam application time shown in FIG. 3 may be executed by a network-side device.

Optionally, the target resource object is a CC or a BWP on a CC. In a case that the target resource object is a CC, each of the configuration parameters separately corresponds to a plurality of CCs. In a case that the target resource object is a BWP on a CC, each of the configuration parameters separately corresponds to a plurality of BWPs on CCs.

Step 302. Transmit the first configuration information to a terminal.

Optionally, the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

For example, the network-side device has the configuration parameters carried in the configuration information of the resource object list delivered to the terminal; the network-side device has the configuration parameters carried in the configuration information of the CCs delivered to the terminal; the network-side device has the configuration parameters carried in configuration information of each BWP on the CCs delivered to the terminal; the network-side device has the configuration parameters carried in the configuration information of the target cell in which the uplink control channel is located delivered to the terminal; or the network-side device has the configuration parameters carried in the configuration information of the target BWP of the target cell in which the uplink control channel is located delivered to the terminal.

For the method for determining a beam application time provided in this embodiment of this application, in a case that the network-side device indicates a common beam and the common beam is applied to at least one group of CCs in a carrier aggregation scenario, the terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

FIG. 4 is a schematic flowchart of signaling exchange of a method for determining a beam application time according to an embodiment of this application. As shown in FIG. 4, the method is executed through cooperation between a terminal and a network-side device, and the method includes the following steps.

Step 401. The network-side device obtains first configuration information, where the first configuration information includes a plurality of configuration parameters, and each of the configuration parameters separately corresponds to at least one target resource object, the target resource object being determined based on at least one resource object list.

Optionally, the network-side device obtains first configuration information, where the first configuration information includes a plurality of configuration parameters, and each of the configuration parameters separately corresponds to at least one target resource object, the target resource object being determined based on at least one resource object list.

Step 402. The network-side device transmits the first configuration information to the terminal, and the terminal receives the first configuration information transmitted by the network-side device.

Optionally, the network-side device transmits the first configuration information to the terminal; and the terminal receives the first configuration information transmitted by the network-side device, and the terminal obtains, by parsing the first configuration information, the plurality of configuration parameters included in the first configuration information. Each configuration parameter separately corresponds to at least one target resource object, the target resource object being determined based on at least one resource object list.

Step 403. The terminal determines, based on the configuration parameters, a beam application time for application of a common beam indicated by the network-side device for each target resource object.

For the method for determining a beam application time provided in this embodiment of this application, in a case that the network-side device indicates a common beam and the common beam is applied to at least one group of CCs in a carrier aggregation scenario, the terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

It should be noted that the method for determining a beam application time provided in the embodiments of this application may be executed by an apparatus for determining a beam application time or a control module for executing the method for determining a beam application time in the apparatus for determining a beam application time. In the embodiments of this application, the method for determining a beam application time being executed by the apparatus for determining a beam application time is used as an example to describe the apparatus for determining a beam application time according to the embodiments of this application.

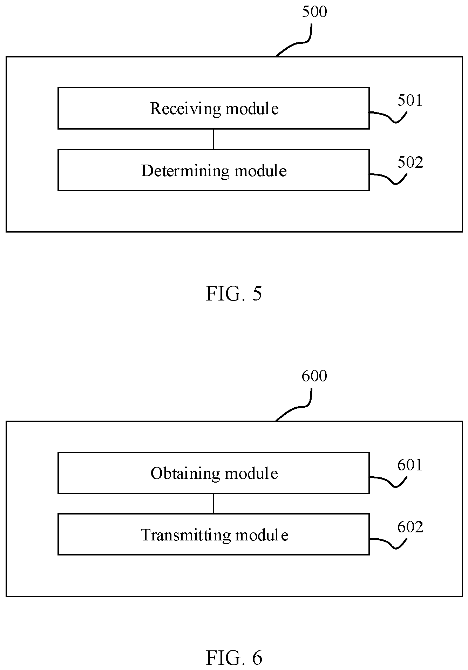

An embodiment of this application provides an apparatus for determining a beam application time, and FIG. 5 is a first schematic structural diagram of the apparatus for determining a beam application time according to this embodiment of this application. As shown in FIG. 5, the apparatus 500 for determining a beam application time includes a receiving module 501 and a determining module 502.

The receiving module 501 is configured to receive first configuration information transmitted by a network-side device, where the first configuration information includes a plurality of configuration parameters, and each of the configuration parameters separately corresponds to at least one target resource object, the target resource object being determined based on at least one resource object list.

The determining module 502 is configured to determine, based on the configuration parameters, a beam application time for application of a common beam indicated by the network-side device for each target resource object.

For the apparatus for determining a beam application time provided in this embodiment of this application, in a case that the network-side device indicates a common beam and the common beam is applied to at least one group of CCs in a carrier aggregation scenario, a terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

Optionally, the target resource object is a CC or a bandwidth part BWP on a CC.

Optionally, the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

Optionally, in a case that the target resource object is a CC and the configuration parameters are carried in the configuration information of the target cell in which the uplink control channel is located, the determining module 502 is specifically configured to:
determine beam application times for application of the common beam for all CCs in the resource object list, based on a configuration parameter corresponding to a first reference CC and included in the configuration information of the target cell in which the uplink control channel is located; and
in a case that the target resource object is a BWP on a CC and the configuration parameters are carried in the configuration information of the BWP of the target cell in which the uplink control channel is located, the determining module 502 is specifically configured to:
   determine beam application times for application of the common beam for all BWPs on all CCs in the resource object list, based on a configuration parameter corresponding to a first reference BWP on a first reference CC and included in the configuration information of the BWP of the target cell in which the uplink control channel is located.

Optionally, in a case that the target resource object is a CC and the configuration parameters are carried in the configuration information of the target cell in which the uplink control channel is located, the determining module 502 is specifically configured to:
determine beam application times for application of the common beam for all CCs in the resource object list, based on configuration parameters corresponding to all CCs and included in the configuration information of the target cell in which the uplink control channel is located; and
in a case that the target resource object is a BWP on a CC and the configuration parameters are carried in the configuration information of the BWP of the target cell in which the uplink control channel is located, the determining module 502 is specifically configured to:
   determine beam application times for application of the common beam for all BWPs on all CCs in the resource object list, based on configuration parameters corresponding to all BWPs on all CCs and included in the configuration information of the BWP of the target cell in which the uplink control channel is located.

Optionally, in a case that the target resource object is a CC and the configuration parameters are carried in the configuration information of the resource object list, the determining module 502 is specifically configured to:
determine beam application times for application of the common beam for all CCs in the resource object list, based on configuration parameters, included in the configuration information of the resource object list, of all CCs and corresponding to the target cell in which the uplink control channel is located, or of all CCs and corresponding to the BWP of the target cell in which the uplink control channel is located; and
in a case that the target resource object is a BWP on a CC and the configuration parameters are carried in the configuration information of the resource object list, the determining module 502 is specifically configured to:
   determine beam application times for application of the common beam for all BWPs on all CCs in the resource object list, based on configuration parameters, included in the configuration information of the resource object list, of all BWPs on all CCs and corresponding to the target cell in which the uplink control channel is located, or of all BWPs on all CCs and corresponding to the BWP of the target cell in which the uplink control channel is located.

Optionally, in a case that the target resource object is a CC and the configuration parameters are carried in the configuration information of the resource object list, the determining module 502 is specifically configured to:
determine beam application times for application of the common beam for all CCs in the resource object list, based on a configuration parameter, included in the configuration information of the resource object list, of a second reference CC and corresponding to the target cell in which the uplink control channel is located, or of a second reference CC and corresponding to the BWP of the target cell in which the uplink control channel is located; and
in a case that the target resource object is a BWP on a CC and the configuration parameters are carried in the configuration information of the resource object list, the determining module 502 is specifically configured to:
   determine beam application times for application of the common beam for all BWPs on all CCs in the resource object list, based on a configuration parameter, included in the configuration information of the resource object list, of a second reference BWP on a second reference CC and corresponding to the target cell in which the uplink control channel is located, or of a second reference BWP on a second reference CC and corresponding to the BWP of the target cell in which the uplink control channel is located.

Optionally, in a case that the target resource object is a CC and the configuration parameters are carried in the configuration information of the resource object list, the determining module 502 is specifically configured to:
determine beam application times for application of the common beam for all CCs in the resource object list, based on configuration parameters of all CCs included in the configuration information of the resource object list; and
in a case that the target resource object is a BWP on a CC and the configuration parameters are carried in the configuration information of the resource object list, the determining, based on the configuration parameters, a beam application time for application of a common beam indicated by the network-side device for each target resource object includes:
   determining beam application times for application of the common beam for all BWPs on all CCs in the resource object list, based on configuration parameters of all BWPs on all CCs included in the configuration information of the resource object list.

Optionally, in a case that the target resource object is a CC and the configuration parameters are carried in the configuration information of the resource object list, the determining module 502 is specifically configured to determine beam application times for application of the common beam for all CCs in the resource object list, based on a configuration parameter of a third reference CC included in the configuration information of the resource object list; and
in a case that the target resource object is a BWP on a CC and the configuration parameters are carried in the configuration information of the resource object list, the determining module 502 is specifically configured to determine beam application times for application of the common beam for all BWPs on all CCs in the resource object list, based on a configuration parameter of a third reference BWP on a third reference CC included in the configuration information of the resource object list.

Optionally, in a case that the target resource object is a CC and the configuration parameters are carried in the configuration information of at least one CC, the determining module 502 is specifically configured to:
determine, based on the configuration parameters carried in the configuration information of the CCs, a beam application time for application of the common beam for the CC;
in a case that the target resource object is a BWP on a CC and the configuration parameters are carried in the configuration information of at least one CC, the determining module 502 is specifically configured to:
   determine, based on a plurality of configuration parameters carried in the configuration information of the CCs, beam application times for application of the common beam for BWPs on the CC, respectively; and
   in a case that the target resource object is a BWP on a CC and the configuration parameters are carried in the configuration information of at least one BWP on at least one CC, the determining module 502 is specifically configured to:
      determine, based on a configuration parameter carried in configuration information of each BWP on the CCs, beam application times for application of the common beam for BWPs on the CC, respectively.

Optionally, in a case of a plurality of configuration parameters being carried in the configuration information of the CC,
the configuration parameters are respectively set with target cells in which uplink control channels are located, or with indexes corresponding to BWPs of the target cells in which the uplink control channels are located; or
the configuration parameters respectively correspond, in a preset arrangement order, to target cells in which uplink control channels are located, or BWPs of the target cells in which the uplink control channels are located.

Optionally, the determining module 502 is specifically configured to:
obtain a configuration parameter carried in configuration information of a first target CC among the CCs, and determine, based on the configuration parameter, a beam application time for application of the common beam for each CC; or
obtain a configuration parameter carried in configuration information of a first target BWP on a first target CC among the CCs, and determine, based on the configuration parameter, beam application times for application of the common beam for all BWPs on the CCs.

Optionally, only one fourth reference CC or one fourth reference BWP on one fourth reference CC is configured with a configuration parameter; and the determining module 502 is specifically configured to:
determine, based on the configuration parameter corresponding to the fourth reference CC, beam application times for application of the common beam for all CCs; or
determine, based on the configuration parameter corresponding to the fourth reference BWP on the fourth reference CC, beam application times for application of the common beam for all BWPs on all CCs.

Optionally, in a case that the CCs belong to one band, the determining module 502 is specifically configured to:
select at least one target configuration parameter from all configuration parameters as a configuration parameter corresponding to the CCs or BWPs on the CCs; and
determine, based on the configuration parameter corresponding to the CCs or the BWPs on the CCs, beam application times for application of the common beam for the CCs or the BWPs on the CCs.

Optionally, the determining module 502 is specifically configured to perform rounding calculation, in a unit of slot, on the configuration parameters to obtain a beam application time for application of the common beam for each target resource object.

Optionally, the determining module 502 is specifically configured to:
in a case that the configuration parameters are in a unit of number of symbols, determine a 1st slot after Y symbols following a first time as a beam application time for application of the common beam for each target resource object, where the configuration parameters are Y, and the first time is a time to transmit an ACK message in response to a first message, the first message being a message that the network-side device transmits for indicating the common beam;
in a case that the configuration parameters are in a unit of number of symbols, determine a slot at which the Y-th symbol following the first time is located as a beam application time for application of the common beam for each target resource object;
in a case that the configuration parameters are in a unit of number of slots, determine a 1st slot after the Y-th slot following the first time or the Y-th slot following the first time as a beam application time for application of the common beam for each target resource object; or
in a case that the configuration parameters are in a unit of second or millisecond, determine a 1st slot after the Y-th unit following the first time or a slot at which the Y-th unit following the first time is located as a beam application time for application of the common beam for each target resource object.

FIG. 6 is a second schematic structural diagram of an apparatus for determining a beam application time according to an embodiment of this application. As shown in FIG. 6, the apparatus 600 for determining a beam application time includes an obtaining module 601 and a transmitting module 602.

The obtaining module 601 is configured to obtain first configuration information, where the first configuration information includes a plurality of configuration parameters, and each of the configuration parameters separately corresponds to at least one target resource object, the target resource object being determined based on at least one resource object list.

The transmitting module 602 is configured to transmit the first configuration information to a terminal.

For the apparatus for determining a beam application time provided in this embodiment of this application, in a case that a network-side device indicates a common beam and the common beam is applied to at least one group of CCs in a carrier aggregation scenario, the terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

Optionally, the target resource object is a CC or a BWP on a CC.

Optionally, the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

The apparatus for determining a beam application time in this embodiment of this application may be an apparatus or an apparatus or electronic device having an operating system, or may be a component, integrated circuit, or chip in a terminal. The apparatus or electronic device may be a mobile terminal or a non-mobile terminal. For example, the mobile terminal may include but is not limited to the types of the terminal 11 listed above, and the non-mobile terminal may be a server, a network attached storage (Network Attached Storage, NAS), a personal computer (personal computer, PC), a television (television, TV), a teller machine, a self-service machine, or the like, which is not specifically limited in the embodiments of this application.

The apparatus for determining a beam application time provided in this embodiment of this application can implement the processes implemented in the method embodiments of FIG. 2 to FIG. 4 with the same technical effects achieved. To avoid repetition, details are not described herein again.

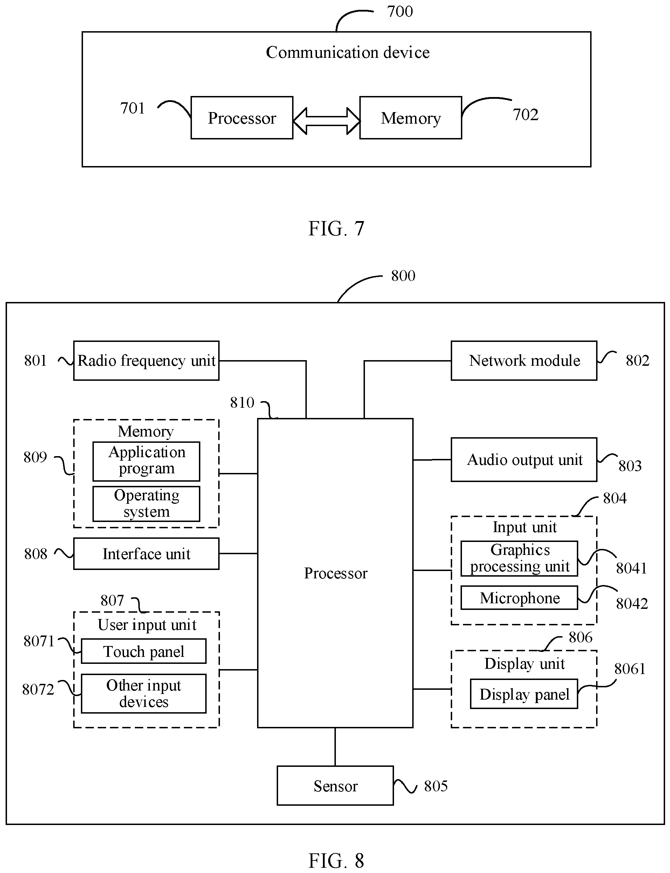

Optionally, as shown in FIG. 7, an embodiment of this application further provides a communication device 700 including a processor 701, a memory 702, and a program or instructions stored in the memory 702 and capable of running on the processor 701. For example, in a case that the communication device 700 is a terminal, when the program or instructions are executed by the processor 701, the processes of the foregoing embodiment of the method for determining a beam application time are implemented, with the same technical effects achieved. In a case that the communication device 700 is a network-side device, when the program or instructions are executed by the processor 701, the processes of the foregoing embodiment of the method for determining a beam application time are implemented, with the same technical effects achieved. To avoid repetition, details are not described herein again.

An embodiment of this application further provides a terminal including a processor and a communication interface. The communication interface is configured to receive first configuration information transmitted by a network-side device, where the first configuration information includes a plurality of configuration parameters, and each of the configuration parameters separately corresponds to at least one target resource object, the target resource object being determined based on at least one resource object list. The processor is configured to determine, based on the configuration parameters, a beam application time for application of a common beam indicated by the network-side device for each target resource object. This terminal embodiment corresponds to the foregoing method embodiment on the terminal side. All processes and implementations in the foregoing method embodiment can be applicable to this terminal embodiment, with the same technical effects achieved. Specifically, FIG. 8 is a schematic diagram of a hardware structure of a terminal implementing an embodiment of this application.

The terminal 800 includes but is not limited to at least some of components such as a radio frequency unit 801, a network module 802, an audio output unit 803, an input unit 804, a sensor 805, a display unit 806, a user input unit 807, an interface unit 808, a memory 809, and a processor 810.

It can be understood by those skilled in the art that the terminal 800 may further include a power supply (for example, a battery) supplying power to the components. The power supply may be logically connected to the processor 810 via a power management system, so that functions such as charge management, discharge management, and power consumption management are implemented by using the power management system. The structure of the terminal shown in FIG. 8 does not constitute any limitation on the terminal, and the terminal may include more or fewer components than shown in the figure, or combine some of the components, or have different arrangements of the components. Details are not described herein.

It should be understood that in this embodiment of this application, the input unit 804 may include a graphics processing unit (Graphics Processing Unit, GPU) 8041 and a microphone 8042. The graphics processing unit 8041 processes image data of a static picture or a video that is obtained by an image capture apparatus (for example, a camera) in a video capture mode or an image capture mode. The display unit 806 may include a display panel 8061. The display panel 8061 may be configured in a form of a liquid crystal display, an organic light-emitting diode display, or the like. The user input unit 807 includes a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a functional button (such as a volume control button or a power on/off button), a trackball, a mouse, and a joystick. Details are not described herein.

In this embodiment of this application, the radio frequency unit 801 transmits downlink data received from a network-side device to the processor 810 for processing, and in addition, transmits uplink data to the network-side device. Generally, the radio frequency unit 801 includes but is not limited to an antenna, at least one amplifier, a transceiver, a coupler, a low noise amplifier, and a duplexer.

The memory 809 may be configured to store software programs or instructions and various data. The memory 809 may mainly include a program or instruction storage area and a data storage area. The program or instruction storage area may store an operating system, an application program or instructions required by at least one function (for example, sound play function or image play function), and the like. In addition, the memory 809 may include a high-speed random access memory, and may further include a non-volatile memory, where the non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage device, flash memory device, or other non-volatile solid-state storage device.

The processor 810 may include one or more processing units. Optionally, the processor 810 may integrate an application processor and a modem processor. The application processor mainly processes an operating system, a user interface, application programs or instructions, and the like. The modem processor mainly processes wireless communication, for example, being a baseband processor. It can be understood that the modem processor may alternatively be not integrated in the processor 810.

The radio frequency unit 801 is configured to receive first configuration information transmitted by a network-side device, where the first configuration information includes a plurality of configuration parameters, and each of the configuration parameters separately corresponds to at least one target resource object, the target resource object being determined based on at least one resource object list.

The processor 810 is configured to determine, based on the configuration parameters, a beam application time for application of a common beam indicated by the network-side device for each target resource object.

For the terminal provided in this embodiment of this application, in a case that a network-side device indicates a common beam and the common beam is applied to at least one group of CCs in a carrier aggregation scenario, the terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

Optionally, the target resource object is a CC or a bandwidth part BWP on a CC.

Optionally, the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

Optionally, in a case that the target resource object is a CC and the configuration parameters are carried in the configuration information of the target cell in which the uplink control channel is located, the processor 810 is further configured to determine beam application times for application of the common beam for all CCs in the resource object list, based on a configuration parameter corresponding to a first reference CC and included in the configuration information of the target cell in which the uplink control channel is located; and
in a case that the target resource object is a BWP on a CC and the configuration parameters are carried in the configuration information of the BWP of the target cell in which the uplink control channel is located, the processor 810 is further configured to determine beam application times for application of the common beam for all BWPs on all CCs in the resource object list, based on a configuration parameter corresponding to a first reference BWP on a first reference CC and included in the configuration information of the BWP of the target cell in which the uplink control channel is located.

Optionally, in a case that the target resource object is a CC and the configuration parameters are carried in the configuration information of the target cell in which the uplink control channel is located, the processor 810 is further configured to determine beam application times for application of the common beam for all CCs in the resource object list, based on configuration parameters corresponding to all CCs and included in the configuration information of the target cell in which the uplink control channel is located; and
in a case that the target resource object is a BWP on a CC and the configuration parameters are carried in the configuration information of the BWP of the target cell in which the uplink control channel is located, the processor 810 is further configured to determine beam application times for application of the common beam for all BWPs on all CCs in the resource object list, based on configuration parameters corresponding to all BWPs on all CCs and included in the configuration information of the BWP of the target cell in which the uplink control channel is located.

Optionally, in a case that the target resource object is a CC and the configuration parameters are carried in the configuration information of the resource object list, the processor 810 is further configured to determine beam application times for application of the common beam for all CCs in the resource object list, based on configuration parameters, included in the configuration information of the resource object list, of all CCs and corresponding to the target cell in which the uplink control channel is located, or of all CCs and corresponding to the BWP of the target cell in which the uplink control channel is located; and
in a case that the target resource object is a BWP on a CC and the configuration parameters are carried in the configuration information of the resource object list, the processor 810 is further configured to determine beam application times for application of the common beam for all BWPs on all CCs in the resource object list, based on configuration parameters, included in the configuration information of the resource object list, of all BWPs on all CCs and corresponding to the target cell in which the uplink control channel is located, or of all BWPs on all CCs and corresponding to the BWP of the target cell in which the uplink control channel is located.

Optionally, in a case that the target resource object is a CC and the configuration parameters are carried in the configuration information of the resource object list, the processor 810 is further configured to determine beam application times for application of the common beam for all CCs in the resource object list, based on a configuration parameter, included in the configuration information of the resource object list, of a second reference CC and corresponding to the target cell in which the uplink control channel is located, or of a second reference CC and corresponding to the BWP of the target cell in which the uplink control channel is located; and
in a case that the target resource object is a BWP on a CC and the configuration parameters are carried in the configuration information of the resource object list, the processor 810 is further configured to determine beam application times for application of the common beam for all BWPs on all CCs in the resource object list, based on a configuration parameter, included in the configuration information of the resource object list, of a second reference BWP on a second reference CC and corresponding to the target cell in which the uplink control channel is located, or of a second reference BWP on a second reference CC and corresponding to the BWP of the target cell in which the uplink control channel is located.

Optionally, in a case that the target resource object is a CC and the configuration parameters are carried in the configuration information of the resource object list, the processor 810 is further configured to determine beam application times for application of the common beam for all CCs in the resource object list, based on configuration parameters of all CCs included in the configuration information of the resource object list; and
in a case that the target resource object is a BWP on a CC and the configuration parameters are carried in the configuration information of the resource object list, the processor 810 is further configured to determine beam application times for application of the common beam for all BWPs on all CCs in the resource object list, based on configuration parameters of all BWPs on all CCs included in the configuration information of the resource object list.

Optionally, in a case that the target resource object is a CC and the configuration parameters are carried in the configuration information of the resource object list, the processor 810 is further configured to determine beam application times for application of the common beam for all CCs in the resource object list, based on a configuration parameter of a third reference CC included in the configuration information of the resource object list; and
in a case that the target resource object is a BWP on a CC and the configuration parameters are carried in the configuration information of the resource object list, the processor 810 is further configured to determine beam application times for application of the common beam for all BWPs on all CCs in the resource object list, based on a configuration parameter of a third reference BWP on a third reference CC included in the configuration information of the resource object list.

Optionally, in a case that the target resource object is a CC and the configuration parameters are carried in the configuration information of at least one CC, the processor 810 is further configured to determine, based on the configuration parameters carried in the configuration information of the CCs, a beam application time for application of the common beam for the CC;
in a case that the target resource object is a BWP on a CC and the configuration parameters are carried in the configuration information of at least one CC, the processor 810 is further configured to determine, based on a plurality of configuration parameters carried in the configuration information of the CCs, beam application times for application of the common beam for BWPs on the CC, respectively; and
in a case that the target resource object is a BWP on a CC and the configuration parameters are carried in the configuration information of at least one BWP on at least one CC, the processor 810 is further configured to determine, based on a configuration parameter carried in configuration information of each BWP on the CCs, beam application times for application of the common beam for BWPs on the CC, respectively.

Optionally, in a case of a plurality of configuration parameters being carried in the configuration information of the CC,
the configuration parameters are respectively set with target cells in which uplink control channels are located, or with indexes corresponding to BWPs of the target cells in which the uplink control channels are located; or
the configuration parameters respectively correspond, in a preset arrangement order, to target cells in which uplink control channels are located, or BWPs of the target cells in which the uplink control channels are located.

Optionally, the processor 810 is further configured to obtain a configuration parameter carried in configuration information of a first target CC among the CCs, and determine, based on the configuration parameter, a beam application time for application of the common beam for each CC; or
obtain a configuration parameter carried in configuration information of a first target BWP on a first target CC among the CCs, and determine, based on the configuration parameter, beam application times for application of the common beam for all BWPs on the CCs.

Optionally, only one fourth reference CC or one fourth reference BWP on one fourth reference CC is configured with a configuration parameter; and
the processor 810 is further configured to determine, based on the configuration parameter corresponding to the fourth reference CC, beam application times for application of the common beam for all CCs; or
determine, based on the configuration parameter corresponding to the fourth reference BWP on the fourth reference CC, beam application times for application of the common beam for all BWPs on all CCs.

Optionally, in a case that the CCs belong to one band, the processor 810 is further configured to:
select at least one target configuration parameter from all configuration parameters as a configuration parameter corresponding to the CCs or BWPs on the CCs; and
determine, based on the configuration parameter corresponding to the CCs or the BWPs on the CCs, beam application times for application of the common beam for the CCs or the BWPs on the CCs.

Optionally, the processor 810 is further configured to perform rounding calculation, in a unit of slot, on the configuration parameters to obtain a beam application time for application of the common beam for each target resource object.

Optionally, the processor 810 is further configured to:
in a case that the configuration parameters are in a unit of number of symbols, determine a 1st slot after Y symbols following a first time as a beam application time for application of the common beam for each target resource object, where the configuration parameters are Y, and the first time is a time to transmit an ACK message in response to a first message, the first message being a message that the network-side device transmits for indicating the common beam;
in a case that the configuration parameters are in a unit of number of symbols, determine a slot at which the Y-th symbol following the first time is located as a beam application time for application of the common beam for each target resource object;
in a case that the configuration parameters are in a unit of number of slots, determine a 1st slot after the Y-th slot following the first time or the Y-th slot following the first time as a beam application time for application of the common beam for each target resource object; or
in a case that the configuration parameters are in a unit of second or millisecond, determine a 1st slot after the Y-th unit following the first time or a slot at which the Y-th unit following the first time is located as a beam application time for application of the common beam for each target resource object.

For the terminal provided in this embodiment of this application, in a case that a network-side device indicates a common beam and the common beam is applied to at least one group of CCs in a carrier aggregation scenario, the terminal determines, based on configuration parameters configured by the network-side device, beam application times for application of the common beam for the CCs or BWPs on the CCs in the at least one group of CCs, such that the network-side device and the terminal have consistent understanding of beam effective times for application of the common beam for the CCs/BWPs, thus ensuring beam alignment and correct data transmission.

An embodiment of this application further provides a network-side device including a processor and a communication interface. The processor is configured to obtain first configuration information, where the first configuration information includes a plurality of configuration parameters, and each of the configuration parameters separately corresponds to at least one target resource object, the target resource object being determined based on at least one resource object list. The communication interface is configured to transmit the first configuration information to a terminal. This network-side device embodiment corresponds to the foregoing network-side device method embodiment. All processes and implementations in the foregoing method embodiment can be applicable to this network-side device embodiment, with the same technical effects achieved.

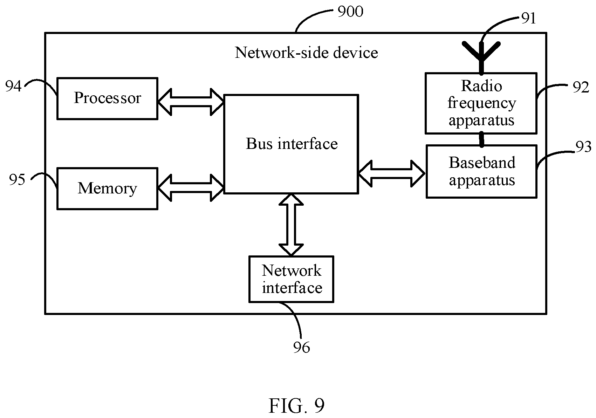

Specifically, an embodiment of this application further provides a network-side device. As shown in FIG. 9, the network-side device 900 includes an antenna 91, a radio frequency apparatus 92, and a baseband apparatus 93. The antenna 91 is connected to the radio frequency apparatus 92. In an uplink direction, the radio frequency apparatus 92 receives information by using the antenna 91, and transmits the received information to the baseband apparatus 93 for processing. In a downlink direction, the baseband apparatus 93 processes to-be-transmitted information, and transmits the information to the radio frequency apparatus 92; and the radio frequency apparatus 92 processes the received information and then transmits the information out by using the antenna 91.

The frequency band processing apparatus may be located in the baseband apparatus 93. The method executed by the network-side device in the foregoing embodiments may be implemented in the baseband apparatus 93, and the baseband apparatus 93 includes a processor 94 and a memory 95.

The baseband apparatus 93 may include, for example, at least one baseband board, where multiple chips are disposed on the baseband board. As shown in FIG. 9, one of the chips is, for example, the processor 94, connected to the memory 95, to invoke a program in the memory 95 to perform the operation of the network-side device shown in the foregoing method embodiment.

The baseband apparatus 93 may further include a network interface 96 configured to exchange information with the radio frequency apparatus 92, where the interface is, for example, a common public radio interface (common public radio interface, CPRI for short).

Specifically, the network-side device in this embodiment of the present invention further includes instructions or a program stored in the memory 95 and capable of running on the processor 94. The processor 94 invokes the instructions or program in the memory 95 to perform the method performed by the modules shown in FIG. 6, with the same technical effects achieved. To avoid repetition, details are not described herein again.

An embodiment of this application further provides a readable storage medium, where the readable storage medium stores a program or instructions, and when the program or instructions are executed by a processor, the processes of the foregoing embodiments of the method for determining a beam application time are implemented, with the same technical effects achieved. To avoid repetition, details are not described herein again.

The processor is a processor in the terminal described in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

An embodiment of this application further provides a chip, where the chip includes a processor and a communication interface, the communication interface is coupled to the processor, and the processor is configured to run a program or instructions to implement the processes of the foregoing embodiments of the method for determining a beam application time, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a non-transitory storage medium. The program/program product is executed by at least one processor to implement the processes of the foregoing embodiments of the method for determining a beam application time, with the same technical effects achieved. To avoid repetition, details are not described herein again.

It should be noted that the terms "include", "comprise", or any of their variants are intended to cover a non-exclusive inclusion, such that a process, method, article, or apparatus that includes a series of elements includes not only those elements but also other elements that are not expressly listed, or further includes elements inherent to such process, method, article, or apparatus. Without more restrictions, an element preceded by the statement "includes a..." does not preclude the presence of other identical elements in the process, method, article, or apparatus that includes the element. Furthermore, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

By means of the foregoing description of the implementations, persons skilled in the art may clearly understand that the method in the foregoing embodiments may be implemented by software with a necessary general hardware platform. Certainly, the method in the foregoing embodiments may alternatively be implemented by hardware. However, in many cases, the former is a preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, a network device, or the like) to perform the method described in the embodiments of this application.

The embodiments of this application have been described with reference to the accompanying drawings. However, this application is not limited to the foregoing specific implementations. These specific implementations are merely for illustration rather than limitation. Inspired by this application, persons of ordinary skill in the art may develop many other forms which do not depart from the essence of this application and the protection scope of the claims, and all such forms shall fall within the protection scope of this application.

## Claims

1. A method for determining a beam application time, performed by a terminal and comprising:
receiving first configuration information transmitted by a network-side device, wherein the first configuration information comprises a plurality of configuration parameters, and each of the configuration parameters separately corresponds to at least one target resource object, the target resource object being determined based on at least one resource object list; and
determining, based on the configuration parameters, a beam application time for application of a common beam indicated by the network-side device for each target resource object.

2. The method for determining a beam application time according to claim 1, wherein the target resource object is a component carrier CC or a bandwidth part BWP on a CC.

3. The method for determining a beam application time according to claim 2, wherein the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

4. The method for determining a beam application time according to claim 3, wherein
in a case that the target resource object is a CC and the configuration parameters are carried in the configuration information of the target cell in which the uplink control channel is located, the determining, based on the configuration parameters, a beam application time for application of a common beam indicated by the network-side device for each target resource object comprises:
determining beam application times for application of the common beam for all CCs in the resource object list, based on a configuration parameter corresponding to a first reference CC and comprised in the configuration information of the target cell in which the uplink control channel is located; and
in a case that the target resource object is a BWP on a CC and the configuration parameters are carried in the configuration information of the BWP of the target cell in which the uplink control channel is located, the determining, based on the configuration parameters, a beam application time for application of a common beam indicated by the network-side device for each target resource object comprises:
determining beam application times for application of the common beam for all BWPs on all CCs in the resource object list, based on a configuration parameter corresponding to a first reference BWP on a first reference CC and comprised in the configuration information of the BWP of the target cell in which the uplink control channel is located.

5. The method for determining a beam application time according to claim 3, wherein
in a case that the target resource object is a CC and the configuration parameters are carried in the configuration information of the target cell in which the uplink control channel is located, the determining, based on the configuration parameters, a beam application time for application of a common beam indicated by the network-side device for each target resource object comprises:
determining beam application times for application of the common beam for all CCs in the resource object list, based on configuration parameters corresponding to all CCs and comprised in the configuration information of the target cell in which the uplink control channel is located; and
in a case that the target resource object is a BWP on a CC and the configuration parameters are carried in the configuration information of the BWP of the target cell in which the uplink control channel is located, the determining, based on the configuration parameters, a beam application time for application of a common beam indicated by the network-side device for each target resource object comprises:
determining beam application times for application of the common beam for all BWPs on all CCs in the resource object list, based on configuration parameters corresponding to all BWPs on all CCs and comprised in the configuration information of the BWP of the target cell in which the uplink control channel is located.

6. The method for determining a beam application time according to claim 3, wherein
in a case that the target resource object is a CC and the configuration parameters are carried in the configuration information of the resource object list, the determining, based on the configuration parameters, a beam application time for application of a common beam indicated by the network-side device for each target resource object comprises:
determining beam application times for application of the common beam for all CCs in the resource object list, based on configuration parameters, comprised in the configuration information of the resource object list, of all CCs and corresponding to the target cell in which the uplink control channel is located, or of all CCs and corresponding to the BWP of the target cell in which the uplink control channel is located; and
in a case that the target resource object is a BWP on a CC and the configuration parameters are carried in the configuration information of the resource object list, the determining, based on the configuration parameters, a beam application time for application of a common beam indicated by the network-side device for each target resource object comprises:
determining beam application times for application of the common beam for all BWPs on all CCs in the resource object list, based on configuration parameters, comprised in the configuration information of the resource object list, of all BWPs on all CCs and corresponding to the target cell in which the uplink control channel is located, or of all BWPs on all CCs and corresponding to the BWP of the target cell in which the uplink control channel is located.

7. The method for determining a beam application time according to claim 3, wherein
in a case that the target resource object is a CC and the configuration parameters are carried in the configuration information of the resource object list, the determining, based on the configuration parameters, a beam application time for application of a common beam indicated by the network-side device for each target resource object comprises:
determining beam application times for application of the common beam for all CCs in the resource object list, based on a configuration parameter, comprised in the configuration information of the resource object list, of a second reference CC and corresponding to the target cell in which the uplink control channel is located, or of a second reference CC and corresponding to the BWP of the target cell in which the uplink control channel is located; and
in a case that the target resource object is a BWP on a CC and the configuration parameters are carried in the configuration information of the resource object list, the determining, based on the configuration parameters, a beam application time for application of a common beam indicated by the network-side device for each target resource object comprises:
determining beam application times for application of the common beam for all BWPs on all CCs in the resource object list, based on a configuration parameter, comprised in the configuration information of the resource object list, of a second reference BWP on a second reference CC and corresponding to the target cell in which the uplink control channel is located, or of a second reference BWP on a second reference CC and corresponding to the BWP of the target cell in which the uplink control channel is located.

8. The method for determining a beam application time according to claim 3, wherein
in a case that the target resource object is a CC and the configuration parameters are carried in the configuration information of the resource object list, the determining, based on the configuration parameters, a beam application time for application of a common beam indicated by the network-side device for each target resource object comprises:
determining beam application times for application of the common beam for all CCs in the resource object list, based on configuration parameters of all CCs comprised in the configuration information of the resource object list; and
in a case that the target resource object is a BWP on a CC and the configuration parameters are carried in the configuration information of the resource object list, the determining, based on the configuration parameters, a beam application time for application of a common beam indicated by the network-side device for each target resource object comprises:
determining beam application times for application of the common beam for all BWPs on all CCs in the resource object list, based on configuration parameters of all BWPs on all CCs comprised in the configuration information of the resource object list.

9. The method for determining a beam application time according to claim 3, wherein
in a case that the target resource object is a CC and the configuration parameters are carried in the configuration information of the resource object list, the determining, based on the configuration parameters, a beam application time for application of a common beam indicated by the network-side device for each target resource object comprises:
determining beam application times for application of the common beam for all CCs in the resource object list, based on a configuration parameter of a third reference CC comprised in the configuration information of the resource object list; and
in a case that the target resource object is a BWP on a CC and the configuration parameters are carried in the configuration information of the resource object list, the determining, based on the configuration parameters, a beam application time for application of a common beam indicated by the network-side device for each target resource object comprises:
determining beam application times for application of the common beam for all BWPs on all CCs in the resource object list, based on a configuration parameter of a third reference BWP on a third reference CC comprised in the configuration information of the resource object list.

10. The method for determining a beam application time according to claim 3, wherein
in a case that the target resource object is a CC and the configuration parameters are carried in the configuration information of at least one CC, the determining, based on the configuration parameters, a beam application time for application of a common beam indicated by the network-side device for each target resource object comprises:
determining, based on the configuration parameters carried in the configuration information of the CCs, a beam application time for application of the common beam for the CC;
in a case that the target resource object is a BWP on a CC and the configuration parameters are carried in the configuration information of at least one CC, the determining, based on the configuration parameters, a beam application time for application of a common beam indicated by the network-side device for each target resource object comprises:
determining, based on a plurality of configuration parameters carried in the configuration information of the CCs, beam application times for application of the common beam for BWPs on the CC, respectively; and
in a case that the target resource object is a BWP on a CC and the configuration parameters are carried in the configuration information of at least one BWP on at least one CC, the determining, based on the configuration parameters, a beam application time for application of a common beam indicated by the network-side device for each target resource object comprises:
determining, based on a configuration parameter carried in configuration information of each BWP on the CCs, beam application times for application of the common beam for BWPs on the CC, respectively.

11. The method for determining a beam application time according to claim 10, wherein in a case of a plurality of configuration parameters being carried in the configuration information of the CC,
the configuration parameters are respectively set with target cells in which uplink control channels are located, or with indexes corresponding to BWPs of the target cells in which the uplink control channels are located; or
the configuration parameters respectively correspond, in a preset arrangement order, to target cells in which uplink control channels are located, or BWPs of the target cells in which the uplink control channels are located.

12. The method for determining a beam application time according to claim 10, wherein the determining a beam application time for application of a common beam indicated by the network-side device for each target resource object comprises:
obtaining a configuration parameter carried in configuration information of a first target CC among the CCs, and determining, based on the configuration parameter, a beam application time for application of the common beam for each CC; or
obtaining a configuration parameter carried in configuration information of a first target BWP on a first target CC among the CCs, and determining, based on the configuration parameter, beam application times for application of the common beam for all BWPs on the CCs.

13. The method for determining a beam application time according to claim 3, wherein only one fourth reference CC or one fourth reference BWP on one fourth reference CC is configured with a configuration parameter; and
the determining, based on the configuration parameters, a beam application time for application of a common beam indicated by the network-side device for each target resource object comprises:
determining, based on the configuration parameter corresponding to the fourth reference CC, beam application times for application of the common beam for all CCs; or
determining, based on the configuration parameter corresponding to the fourth reference BWP on the fourth reference CC, beam application times for application of the common beam for all BWPs on all CCs.

14. The method for determining a beam application time according to any one of claims 4 to 13, wherein
in a case that the CCs belong to one band, the determining, based on the configuration parameters, a beam application time for application of a common beam indicated by the network-side device for each target resource object comprises:
selecting at least one target configuration parameter from all configuration parameters as a configuration parameter corresponding to the CCs or BWPs on the CCs; and
determining, based on the configuration parameter corresponding to the CCs or the BWPs on the CCs, beam application times for application of the common beam for the CCs or the BWPs on the CCs.

15. The method for determining a beam application time according to claim 1, wherein
the determining, based on the configuration parameters, a beam application time for application of a common beam indicated by the network-side device for each target resource object comprises:
performing rounding calculation, in a unit of slot, on the configuration parameters to obtain the beam application time for application of the common beam for each target resource object.

16. The method for determining a beam application time according to claim 15, wherein
the performing rounding calculation, in a unit of slot, on the configuration parameters to obtain the beam application time for application of the common beam for each target resource object comprises:
in a case that the configuration parameters are in a unit of number of symbols, determining a 1st slot after Y symbols following a first time as the beam application time for application of the common beam for each target resource object, wherein the configuration parameters are Y, and the first time is a time to transmit an acknowledgement ACK message in response to a first message, the first message being a message that the network-side device transmits for indicating the common beam;
in a case that the configuration parameters are in a unit of number of symbols, determining a slot at which the Y-th symbol following the first time is located as the beam application time for application of the common beam for each target resource object;
in a case that the configuration parameters are in a unit of number of slots, determining a 1st slot after the Y-th slot following the first time or the Y-th slot following the first time as the beam application time for application of the common beam for each target resource object; or
in a case that the configuration parameters are in a unit of second or millisecond, determining a 1st slot after the Y-th unit following the first time or a slot at which the Y-th unit following the first time is located as the beam application time for application of the common beam for each target resource object.

17. A method for determining a beam application time, performed by a network-side device and comprising:
obtaining first configuration information, wherein the first configuration information comprises a plurality of configuration parameters, and each of the configuration parameters separately corresponds to at least one target resource object, the target resource object being determined based on at least one resource object list; and
transmitting the first configuration information to a terminal.

18. The method for determining a beam application time according to claim 17, wherein the target resource object is a component carrier CC or a BWP on a CC.

19. The method for determining a beam application time according to claim 18, wherein the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

20. An apparatus for determining a beam application time, comprising:
a receiving module configured to receive first configuration information transmitted by a network-side device, wherein the first configuration information comprises a plurality of configuration parameters, and each of the configuration parameters separately corresponds to at least one target resource object, the target resource object being determined based on at least one resource object list; and
a determining module configured to determine, based on the configuration parameters, a beam application time for application of a common beam indicated by the network-side device for each target resource object.

21. The apparatus for determining a beam application time according to claim 20, wherein the target resource object is a component carrier CC or a bandwidth part BWP on a CC.

22. The apparatus for determining a beam application time according to claim 21, wherein the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

23. The apparatus for determining a beam application time according to claim 22, wherein the determining module is specifically configured to:
in a case that the target resource object is a CC and the configuration parameters are carried in the configuration information of the target cell in which the uplink control channel is located, determine beam application times for application of the common beam for all CCs in the resource object list, based on a configuration parameter corresponding to a first reference CC and comprised in the configuration information of the target cell in which the uplink control channel is located; and
in a case that the target resource object is a BWP on a CC and the configuration parameters are carried in the configuration information of the BWP of the target cell in which the uplink control channel is located, determine beam application times for application of the common beam for all BWPs on all CCs in the resource object list, based on a configuration parameter corresponding to a first reference BWP on a first reference CC and comprised in the configuration information of the BWP of the target cell in which the uplink control channel is located.

24. The apparatus for determining a beam application time according to claim 22, wherein the determining module is specifically configured to:
in a case that the target resource object is a CC and the configuration parameters are carried in the configuration information of the target cell in which the uplink control channel is located, determine beam application times for application of the common beam for all CCs in the resource object list, based on configuration parameters corresponding to all CCs and comprised in the configuration information of the target cell in which the uplink control channel is located; and
in a case that the target resource object is a BWP on a CC and the configuration parameters are carried in the configuration information of the BWP of the target cell in which the uplink control channel is located, determine beam application times for application of the common beam for all BWPs on all CCs in the resource object list, based on configuration parameters corresponding to all BWPs on all CCs and comprised in the configuration information of the BWP of the target cell in which the uplink control channel is located.

25. The apparatus for determining a beam application time according to claim 22, wherein the determining module is specifically configured to:
in a case that the target resource object is a CC and the configuration parameters are carried in the configuration information of the resource object list, determine beam application times for application of the common beam for all CCs in the resource object list, based on configuration parameters, comprised in the configuration information of the resource object list, of all CCs and corresponding to the target cell in which the uplink control channel is located, or of all CCs and corresponding to the BWP of the target cell in which the uplink control channel is located; and
in a case that the target resource object is a BWP on a CC and the configuration parameters are carried in the configuration information of the resource object list, determine beam application times for application of the common beam for all BWPs on all CCs in the resource object list, based on configuration parameters, comprised in the configuration information of the resource object list, of all BWPs on all CCs and corresponding to the target cell in which the uplink control channel is located, or of all BWPs on all CCs and corresponding to the BWP of the target cell in which the uplink control channel is located.

26. The apparatus for determining a beam application time according to claim 22, wherein the determining module is specifically configured to:
in a case that the target resource object is a CC and the configuration parameters are carried in the configuration information of the resource object list, determine beam application times for application of the common beam for all CCs in the resource object list, based on a configuration parameter, comprised in the configuration information of the resource object list, of a second reference CC and corresponding to the target cell in which the uplink control channel is located, or of a second reference CC and corresponding to the BWP of the target cell in which the uplink control channel is located; and
in a case that the target resource object is a BWP on a CC and the configuration parameters are carried in the configuration information of the resource object list, determine beam application times for application of the common beam for all BWPs on all CCs in the resource object list, based on a configuration parameter, comprised in the configuration information of the resource object list, of a second reference BWP on a second reference CC and corresponding to the target cell in which the uplink control channel is located, or of a second reference BWP on a second reference CC and corresponding to the BWP of the target cell in which the uplink control channel is located.

27. The apparatus for determining a beam application time according to claim 22, wherein the determining module is specifically configured to:
in a case that the target resource object is a CC and the configuration parameters are carried in the configuration information of the resource object list, determine beam application times for application of the common beam for all CCs in the resource object list, based on configuration parameters of all CCs comprised in the configuration information of the resource object list; and
in a case that the target resource object is a BWP on a CC and the configuration parameters are carried in the configuration information of the resource object list, determine beam application times for application of the common beam for all BWPs on all CCs in the resource object list, based on configuration parameters of all BWPs on all CCs comprised in the configuration information of the resource object list.

28. The apparatus for determining a beam application time according to claim 22, wherein the determining module is specifically configured to:
in a case that the target resource object is a CC and the configuration parameters are carried in the configuration information of the resource object list, determine beam application times for application of the common beam for all CCs in the resource object list, based on a configuration parameter of a third reference CC comprised in the configuration information of the resource object list; and
in a case that the target resource object is a BWP on a CC and the configuration parameters are carried in the configuration information of the resource object list, determine beam application times for application of the common beam for all BWPs on all CCs in the resource object list, based on a configuration parameter of a third reference BWP on a third reference CC comprised in the configuration information of the resource object list.

29. The apparatus for determining a beam application time according to claim 22, wherein the determining module is specifically configured to:
in a case that the target resource object is a CC and the configuration parameters are carried in the configuration information of at least one CC, determine, based on the configuration parameters carried in the configuration information of the CCs, a beam application time for application of the common beam for the CC;
in a case that the target resource object is a BWP on a CC and the configuration parameters are carried in the configuration information of at least one CC, determine, based on a plurality of configuration parameters carried in the configuration information of the CCs, beam application times for application of the common beam for BWPs on the CC, respectively; and
in a case that the target resource object is a BWP on a CC and the configuration parameters are carried in the configuration information of at least one BWP on at least one CC, determine, based on a configuration parameter carried in configuration information of each BWP on the CCs, beam application times for application of the common beam for BWPs on the CC, respectively.

30. The apparatus for determining a beam application time according to claim 29, wherein in a case of a plurality of configuration parameters being carried in the configuration information of the CC,
the configuration parameters are respectively set with target cells in which uplink control channels are located, or with indexes corresponding to BWPs of the target cells in which the uplink control channels are located; or
the configuration parameters respectively correspond, in a preset arrangement order, to target cells in which uplink control channels are located, or BWPs of the target cells in which the uplink control channels are located.

31. The apparatus for determining a beam application time according to claim 29, wherein the determining module is specifically configured to:
obtain a configuration parameter carried in configuration information of a first target CC among the CCs, and determine, based on the configuration parameter, a beam application time for application of the common beam for each CC; or
obtain a configuration parameter carried in configuration information of a first target BWP on a first target CC among the CCs, and determine, based on the configuration parameter, beam application times for application of the common beam for all BWPs on the CCs.

32. The apparatus for determining a beam application time according to claim 22, wherein only one fourth reference CC or one fourth reference BWP on one fourth reference CC is configured with a configuration parameter; and
the determining module is specifically configured to:
determine, based on the configuration parameter corresponding to the fourth reference CC, beam application times for application of the common beam for all CCs; or
determine, based on the configuration parameter corresponding to the fourth reference BWP on the fourth reference CC, beam application times for application of the common beam for all BWPs on all CCs.

33. The apparatus for determining a beam application time according to any one of claims 23 to 32, wherein the determining module is specifically configured to:
in a case that the CCs belong to one band, select at least one target configuration parameter from all configuration parameters as a configuration parameter corresponding to the CCs or BWPs on the CCs; and
determine, based on the configuration parameter corresponding to the CCs or the BWPs on the CCs, beam application times for application of the common beam for the CCs or the BWPs on the CCs.

34. The apparatus for determining a beam application time according to claim 20, wherein the determining module is specifically configured to:
perform rounding calculation, in a unit of slot, on the configuration parameters to obtain the beam application time for application of the common beam for each target resource object.

35. The apparatus for determining a beam application time according to claim 34, wherein the determining module is specifically configured to:
in a case that the configuration parameters are in a unit of number of symbols, determine a 1st slot after Y symbols following a first time as the beam application time for application of the common beam for each target resource object, wherein the configuration parameters are Y, and the first time is a time to transmit an acknowledgement ACK message in response to a first message, the first message being a message that the network-side device transmits for indicating the common beam;
in a case that the configuration parameters are in a unit of number of symbols, determine a slot at which the Y-th symbol following the first time is located as the beam application time for application of the common beam for each target resource object;
in a case that the configuration parameters are in a unit of number of slots, determine a 1st slot after the Y-th slot following the first time or the Y-th slot following the first time as the beam application time for application of the common beam for each target resource object; or
in a case that the configuration parameters are in a unit of second or millisecond, determine a 1st slot after the Y-th unit following the first time or a slot at which the Y-th unit following the first time is located as the beam application time for application of the common beam for each target resource object.

36. An apparatus for determining a beam application time, comprising:
an obtaining module configured to obtain first configuration information, wherein the first configuration information comprises a plurality of configuration parameters, and each of the configuration parameters separately corresponds to at least one target resource object, the target resource object being determined based on at least one resource object list; and
a transmitting module configured to transmit the first configuration information to a terminal.

37. The apparatus for determining a beam application time according to claim 36, wherein the target resource object is a component carrier CC or a BWP on a CC.

38. The apparatus for determining a beam application time according to claim 37, wherein the configuration parameters are carried in any one of the following or a combination thereof:
configuration information of the resource object list;
configuration information of at least one CC;
configuration information of at least one BWP on at least one CC;
configuration information of a target cell in which an uplink control channel is located; and
configuration information of a target BWP of the target cell in which the uplink control channel is located.

39. A terminal, comprising a processor, a memory, and a program or instructions stored in the memory and capable of running on the processor, wherein when the program or instructions are executed by the processor, steps of the method for determining a beam application time according to any one of claims 1 to 16 are implemented.

40. A network-side device, comprising a processor, a memory, and a program or instructions stored in the memory and capable of running on the processor, wherein when the program or instructions are executed by the processor, steps of the method for determining a beam application time according to any one of claims 17 to 19 are implemented.

41. A readable storage medium, wherein the readable storage medium stores a program or instructions, and when the program or instructions are executed by a processor, steps of the method for determining a beam application time according to any one of claims 1 to 16 are implemented, or steps of the method for determining a beam application time according to any one of claims 17 to 19 are implemented.

42. A chip, wherein the chip comprises a processor and a communication interface, the communication interface is coupled to the processor, and the processor is configured to run a program or instructions to implement steps of the method for determining a beam application time according to any one of claims 1 to 16 or to implement steps of the method for determining a beam application time according to any one of claims 17 to 19.

43. A computer program product/program product, wherein the computer program/program product is stored in a non-transitory storage medium, and the program/program product is executed by at least one processor to implement steps of the method for determining a beam application time according to any one of claims 1 to 16 or to implement steps of the method for determining a beam application time according to any one of claims 17 to 19.
